# EUROPÄISCHE PATENTANMELDUNG

(11) **EP 0 795 523 A1**
(43) Veröffentlichungstag der Anmeldung: **17.09.1997**
(21) Anmeldenummer: 95938674.9
(22) Anmeldetag: 28.11.1995
(51) Int. Cl.: C04B 28/02

(54) **BETONMISCHUNG**

(30) Priorität: 30.11.1994 RU 94041446; 19.10.1995 RU 95117467
(71) Anmelder: Nemtsina, Inna Alexandrovna, St. Petersburg, 197198 (RU); Khokhlov, Anton Lvovich, St. Petersburg, 195112 (RU)
(72) Erfinder: Nemtsina, Inna Alexandrovna, St. Petersburg, 197198 (RU); Khokhlov, Anton Lvovich, St. Petersburg, 195112 (RU)
(74) Vertreter: Springstubbe, Wolf, Dipl.-Ing.
(86) Internationale Anmeldenummer: RU9500248
(87) Internationale Veröffentlichungsnummer: WO9616914

(57) **Zusammenfassung**

Die Erfindung betrifft das Gebiet der Chemie, insbesondere Zusammensetzungen von Betonmischungen, die chemische Zusätze enthalten, und kann in der Baumaterialienindustrie verwendet werden.

Die Aufgabe, auf deren Lösung die Erfindung gerichtet ist, besteht in der Erhöhung der Festigkeit einer Betonmischung und der Verwertung von Abfällen der Spiritusherstellung.

Die gestellte Aufgabe wird in folgender Weise gelöst. Die Betonmischung enthält Zement, einen körnigen Zuschlagstoff, Wasser und einen Zusatz, wobei sie als Zusatz einen Rektifikationsabfall von Spiritus höchster Reinheit - Spirituslutter oder ein Gemisch von Spirituslutter und Spiritustreber - enthält. Spirituslutter wird in der Menge von 0,1 % - 4,0 % von der Zementmasse, umgerechnet auf den trockenen Stoff, genommen. Spiritustreber wird in einer Menge von 0,05 % - 0,3 % von der Zementmasse, umgerechnet auf den trockenen Stoff, genommen.

Der empfohlene Alter der Zusätze beträgt nicht mehr als 20 Tage.

Die angemeldete Erfindung wird beim Bau von Gebäuden, Einrichtungen, Strassen, Belägen usw. Verwendung finden.

## Beschreibung

### Gebiet der Technik

Die Erfindung betrifft das Gebiet der Chemie, insbesondere Zusammensetzungen von Betonmischungen, die chemische Zusätze enthalten, und kann in der Baumaterialienindustrie verwendet werden.

### Bisheriger Stand der Technik

Beton besteht aus den Komponenten: Zement, Wasser und Zuschlagstoffe (körnige Mischungen, meistens Naturstein). Ursprünglich bildet sich bei deren Mischen eine Formmasse - eine Betonmischung bestimmter Konsistenz, die mit der Zeit infolge hydraulischer Härtung des Bindemittels - Zement - zu einem Kunststein erhärtet. Die Eigenschaften des Betons und der Betonmischung können sich unter dem Einfluß von chemischen Zusätzen ändern. Die Zusätze sind chemisch wirksame Stoffe in flüssigem oder pulverförmigem Zustand, die beim Anrühren einer Betonmischung zugesetzt werden und die bestimmte Eigenschaften der Betonmischung oder des erhärteten Betons beeinflussen. Die Zusätze zum Beton, die zur Abstimmung seiner Eigenschaften zugesetzt werden, kann man nach dem Wirkungseffekt in etliche Gruppen einteilen:
- Zusätze, die rheologische Eigenschaften von Betonmischungen beeinflussen (plastifizierende, stabilisierende, wasserhaltende Zusätze);
- Zusätze, die Regulatoren des Erhärtungsprozesses von Beton (beschleunigende, verzögernde, Antifrost-Zusätze) sind;
- Zusätze, die die Porösität und das Formänderungsvermögen ändern (luftaufnehmende, gasbildende Zusätze);
- Zusätze, die dem Beton spezielle Eigenschaften vermitteln (Antikorrosions-, Inhibitor-, dekorative Zusätze).

Es ist eine Betonmischung (UdSSR-Urheberschein Nr. 479743, 1973) bekannt, die ein mineralisches Bindemittel, Zuschlagstoffe, Wasser und einen komplexen Zusatz enthält, als welchen sie schwefelsaures und essigsaures Natrium jeweils in der Menge 0,1% - 2,0% und 0,1% - 2,0% vom Gewicht des mineralischen Bindemittels aufweist. Die Zugabe dieses Zusatzes in die Betonmischung intensiviert den Erhärtungsprozess unter natürlichen Bedingungen und bei Wärmebehandlung um das 1,5- bis 2-fache.

Es ist bekannt, in Betonmischungen als plastifizierende Zusätze Sulfit-Hefe-Maische und Sulfit-Spiritus-Treber zu verwenden, die Abfälle der Spiritusindustrie darstellen (A.P. Tschechow u.a. "Handbuch für Betone und Mörtel", Kiev, Budivelnik, 1979, S. 37 - 39). Die Einführung dieser Zusätze verringert den Zementverbrauch, erhöht die Wasserdichtigkeit und Frostbeständigkeit des Betons, verlangsamt den Erstarrungsprozess.

Die chemischen Zusätze sind aber in streng dosierten Mengen hinzuzugeben, weil die Überschreitung der vorgebenen Norm eine sprunghafte Verschlechterung der Qualität des Betons und von Konstruktionen daraus hervorrufen kann.

### Offenbarung der Erfindung

Die Aufgabe, auf deren Lösung die Erfindung gerichtet ist, besteht in der Erhöhung der Festigkeit einer Betonmischung durch Zugabe von Abfällen der Spiritusherstellung als Zusatz in ihre Zusammensetzung.

Die Aufgabe wird auf folgende Weise gelöst: Die Betonmischung enthält Zement, einen körnigen Zuschlagstoff, Wasser und einen Zusatz, wobei sie als Zusatz einen Rektifikationsabfall von Spiritus höchster Reinheit - Spirituslutter oder ein Gemisch aus Spirituslutter und Spiritustreber - enthält. Spirituslutter wird in einer Menge von 0,1 % - 4,0 % von der Zementmasse, umgerechnet auf den trockenen Stoff, genommen. Spiritustreber wird in einer Menge von 0,05 % - 0,3 % von der Zementmasse, umgerechnet auf den trockenen Stoff, genommen.

Das empfohlene Alter der Zusätze beträgt nicht mehr als 20 Tage.

Spirituslutter und Spiritustreber sind Abfälle der Spiritusherstellung. Der Lutter fällt auf einer Rektifikationssäule von Spiritus höchster Reinheit an und enthält hochsiedende Ester und Säuren, zum Beispiel Essigsäure, Ether und Aldehyde, Äthylalkohol, eine Fuselfraktion, Amylalkohol und andere organische Verunreinigungen. Der Spiritustreber wird auf einer Maischesäule hergestellt (D.N. Klimovskij "Die Technologie der Spiritusherstellung", Moskau, Pischtschepromizdat, 1950, S. 315-316, 372-373; A.F. Khalaim "Die Spiritustechnologie", Moskau, Pischtschepromizdat 1972, S. 131-135; W.L. Jarovenko "Handbuch der Spiritushertellung", Moskau, Legkaja und pischtschewaja Promischlennost, 1981, S. 204-206, 219).

### Varianten der Ausführung der Erfindung

Das Anmachen der Betonmischung geschieht durch gemeinsames Mischen von Zement, Zuschlagstoff, Wasser und des Zusatzes. Die Betonerhärtung erfolgt unter natürlichen Bedingungen und unter Wärme-Feuchtigkeits-Behandlung. Bei der Verwendung von Abfällen der Spiritusherstellung (Lutter; Lutter und Treber) ist es notwendig, ihre Qualität nach der Durchsichtigkeit und nach dem pH-Wert des Mediums zu kontrollieren, wobei unter dem Gesichtspunkt der Erhöhung der physikalisch-mechanischen und Betriebskenndaten des Betons ihr Alter mit bis zu 20 Tagen optimal ist.

Für Betone mit den oben angegebenen Zusätzen von Abfällen der Spiritusherstellung sind schnellere Erhärtungsbedingungen optimal: Dampfbehandlung mit einer Temperatur von 60 °C statt der bei der Herstellung meistens verwendeten 80 °C.

In der unten angegebenen Tabelle 1 sind Beispiele von Betonen verschiedener Zusammensetzung mit und ohne Zusatz von Spirituslutter und ihre Festigkeitsvergleichswerte angegeben.

In den Tabellen 2, 3, 4 sind Beispiele von Betonen verschiedener Zusammensetzung mit und ohne Zusatz in Form eines Gemisches aus Lutter und Treber und ihre Festigkeits-, Wasserdichtigkeits-, Frostbeständigkeitsvergleichswerte angegeben.

**Tabelle 1**

| Festigkeitswerte von Beton mit Zusatz von Spirituslutter und ohne Zusatz | | | | | | | | | | |
|---|---|---|---|---|---|---|---|---|---|---|
| Beton-Zusammensetzung (Zement Quartzsand) | Art des Zusatzes und % von der Zementmasse bezogen auf den trockenen Stoff | W/Z | Festigkeit in MPa bei folgenden Lagerungs-und Aushärtungsbedingungen und im Alter von | | | | | | | |
| | | | Dämpfung | | | | Normale Feuchtigkeitsbedingungen | | | |
| | | | nach WFB | | 28 Tagen | | 7 Tagen | | 28 Tagen | |
| | | | Biegung | Druck | Biegung | Druck | Biegung | Druck | Biegung | Druck |
| 1:3 | ohne Zusatz | 0,48 | 5,7 | 19,4 | 5,0 | 27,8 | 4,0 | 17,0 | 4,7 | 16,3 |
| | 0,3 Lt | 0,47 | 6,4 | 20,6 | 6,5 | 32,8 | 4,3 | 18,8 | 4,6 | 19,2 |
| | 0,5 Lt | 0,48 | 6,9 | 21,6 | 6,4 | 34,7 | 4,3 | 19,4 | 3,9 | 19,1 |
| | 1,0 Lt | 0,485 | 6,5 | 20,5 | 7,0 | 38,0 | 4,1 | 18,6 | 5,0 | 19,3 |

**Tabelle 2**

| Festigkeitswerte von Beton mit und ohne Zusätze von Spirituslutter und Treber | | | | | | | |
|---|---|---|---|---|---|---|---|
| Beton-Zusammensetzung(Zement Sand Splitt) | Art des Zusatzes und % von der Zementmasse bezogen auf den trockenen Stoff | Art von Beton und Zuschlagstoff | W/Z | Festigkeit, MPa, im Alter von | | | |
| | | | | nach WFB | | 28 Tagen | |
| | | | | Biegung | Druck | Biegung | Druck |
| 1:3 | ohne Zusatz | feinkörniger Quartzsand | 0,50 | 3,7 | 17,4 | 6,2 | 27,3 |
| | 0,1 Tr + 2,6 Lt | | 0,404 | 5,8 | 21,8 | 7,7 | 34,9 |
| 1:1, 57:2, 7 | ohne Zusatz | schwerer Granitsplitt, Fr. 5-20, Quartzsand | 0,46 | - | 21,7 | - | 38,6 |
| | 0,1 Tr + 2,4 Lt | | 0,40 | - | 30,9 | - | 42,6 |
| 1:1, 52:2, 56 | ohne Zusatz | schwerer Dolomitsplitt, Fr. 5-20, Quartzsand | 0,63 | - | 11,0 | - | 19,8 |
| | 0,1 Tr + 3,5 Lt | | 0,58 | - | 13,2 | - | 22,0 |

**Tabelle 3**

| Wasserdichtigkeitswerte von Beton mit und ohne Zusätze von Spirituslutter und Treber | | | | |
|---|---|---|---|---|
| Beton-Zusammensetzung | Art des groben Zuschlagstoffes | Art des Zusatzes und % von der Zementmasse bezogen auf den trockenen Stoff | Maximaler Druck, bei dem kein Wasserdurchsickern auftritt, in MPa | Wasserdichtigkeitsklasse des Betons |
| 1:1,57:2,7 | Granit-Splitt Fr.5-20 | ohne Zusatz | 0,4 | W 4 |
| 1:1,57:2,7 | | 0,1 Tr + 2,4 Lt | 1,0 | > W 10 |
| 1:1,52:2,56 | DolomitSplitt Fr.5-20 | ohne Zusatz | 0,2 | W 2 |
| 1:1,52:2,56 | | 0,1 Tr + 3,5 Lt | 1,0 | > W 10 |

**Tabelle 4**

| Frostbeständigkeitswerte von Beton mit und ohne Zusätze von Spirituslutter und Treber | | | | | | | | | |
|---|---|---|---|---|---|---|---|---|---|
| Beton-Zusammensetzung (Zement Sand Splitt) | Art des groben Zuschlagstoffs | Art des Zusatzes und % von der Zementmasse bezogen auf den trockenen Stoff | Wasseraufnahme, % | Druckfestigkeit vor dem Frostbeständigkeitstest, MPa | Änderung der Probenmasse in % nach einer Anzahl von Einfrier-Auftau-Zyklen | | Änderung der Probenfestigkeit in % nach einer Anzahl von Einfrier-Auftau-Zyklen | | Frostbeständigkeitsklasse des Betons F |
| | | | | | 5 | 8 | 5 | 8 | |
| 1:1,57:2,7 | Granit-Splitt Fr.5-20 | ohne Zusatz | 1,6 | 30,0 | +0,2 | +0,2 | +8,0 | +2,0 | F 300 |
| 1:1,57:2,7 | | 0,1Tr +2,4Lt | 0,8 | 33,6 | +0,2 | +0,3 | +13,0 | +5,0 | F 300 |
| 1:1,52:2,56 | Dolomit-Splitt Fr.5-20 | ohne Zusatz | 2,6 | 16,2 | +0,6 | +0,2 | +4,0 | +7,0 | F 300 |
| 1:1,52:2,56 | | 0,1Tr +3,5Lt | 2,1 | 19,0 | +0,2 | +0,3 | +14,0 | +10,0 | F 300 |

### Gewerbliche Verwertbarkeit

Die Ergebnisse der durchgeführten Prüfungen zeigen, daß das Einbringen von Abfällen der Spiritusherstellung - Lutter; Lutter und Treber - in die Zusammensetzung der Betonmischung folgende Vorteile mit sich bringt:
- Die Betonfestigkeit wird höher;
- Der Zementverbrauch wird ohne Beeinträchtigung der Betonfestigkeit um 10 - 15% niedriger;
- Die maximale Dampfbehandlungstemperatur sinkt auf 60 °C, was die Einsparung von Energieressourcen ermöglicht;
- Die Wasserdichtigkeit erhöht sich um das 2,5-fache, die Frostbeständigkeit um eine Klasse.

Die Verwendung der oben genannten Abfälle in der Betontechnologie erfordert keine Anschaffung zusätzlicher Ausrüstung.

Die Verwertung von Abfällen der Spiritusherstellung erlaubt es, auf den Bau von teueren Reinigungsanlagen zu verzichten und verbessert die Ökologie der Umwelt.

Die angemeldete Erfindung wird beim Bau von Gebäuden, Einrichtungen, Strassen, Belägen usw. Verwendung finden.

## Patentansprüche

1. Betonmischung, enthaltend Zement, einen körnigen Zuschlagstoff, Wasser und einen Zusatz,
**dadurch gekennzeichnet,**
daß sie als Zusatz Abfall der Rektifikation von Spiritus höchster Reinheit - Lutter oder Gemisch von Lutter und Spiritustreber - enthält.

2. Betonmischung nach Anspruch 1,
**dadurch gekennzeichnet,**
daß sie Spirituslutter in einer Menge von 0,1 % - 4,0 % von der Zementmasse, umgerechnet auf den trockenen Stoff, enthält.

3. Betonmischung nach Anspr. 1, 2,
**dadurch gekennzeichnet,**
daß sie Spiritustreber in einer Menge von 0,05 % - 0,3 % von der Zementmasse, umgerechnet auf den trockenen Stoff, enthält.

4. Betonmischung nach Anspr. 1, 2, 3,
**dadurch gekennzeichnet,**
daß das Alter von Spirituslutter und Spiritustreber nicht mehr als 20 Tage beträgt.
